# EUROPEAN PATENT SPECIFICATION

(11) **EP 1 463 687 B1**
(45) Date of publication and mention of the grant of the patent: **11.05.2011**
(21) Application number: 02703545.0
(22) Date of filing: 07.01.2002
(51) Int. Cl.: C02F 3/12, C02F 3/30, C02F 1/44

(54) **BIOLOGICAL WATER TREATMENT PROCESS INVOLVING POST-DENITRIFICATION MECHANISM AND A MEMBRANE FILTER**
BIOLOGISCHE WASSERBEHANDLUNG, WELCHE POST-DENITRIFIKATION UND EINEN MEMBRANFILTER UMFASST
TRAITEMENT BIOLOGIQUE FAISANT INTERVENIR UN MECANISME DE POST-DENITRIFICATION ET UN FILTRE A MEMBRANE

(43) Date of publication of application: 06.10.2004
(73) Proprietor: Berliner Wasserbetriebe, 10179 Berlin (DE); COMPAGNIE GENERALE DES EAUX, 75008 Paris (FR)
(72) Inventor: GNIRSS, Regina, 12247 Berlin (DE); LESJEAN, Boris, 10115 Berlin (DE)
(74) Representative: Larcher, Dominique
(86) International application number: PCT/EP2002/000269
(87) International publication number: WO 2003/057632

(56) References cited:
- EP-A- 0 761 607
- EP-A- 0 861 808
- PATENT ABSTRACTS OF JAPAN vol. 1998, no. 02, 30 January 1998 (1998-01-30) -& JP 09 271796 A (KUBOTA CORP), 21 October 1997 (1997-10-21)
- PATENT ABSTRACTS OF JAPAN vol. 013, no. 137 (C-582), 5 April 1989 (1989-04-05) -& JP 63 302996 A (EBARA INFILCO CO LTD;OTHERS: 01), 9 December 1988 (1988-12-09)
- PATENT ABSTRACTS OF JAPAN vol. 2000, no. 08, 6 October 2000 (2000-10-06) -& JP 2000 126793 A (MITSUBISHI HEAVY IND LTD), 9 May 2000 (2000-05-09)

## Description

The invention deals with biological water treatment process. More precisely, the invention deals with a Membrane Bioreactor (MBR) technology.

### State of the art

The Membrane Bioreactor (MBR) technology combines the activated sludge treatment technology with membrane filtration. It was developed in the 80's and has been widely used for treatment of industrial wastewater and municipal wastewater.

Compared to traditional activated sludge treatment technology, MBR technology offers the following advantages: advanced treatment (COD, Nitrogen, Pathogens, etc), robustness and compactness.

Traditionally, MBR systems are operated with high sludge age (solid retention time), and low mass organic load. These conditions favour ammonification and nitrification mechanisms in the aerobic zone (biological transformations of organic nitrogen compounds to ammonia, and ammonia to nitrate via nitrite). When denitrification is required (nitrogen removal mechanism, through the transformation of nitrate to nitrogen gaz), an anoxic zone is added.

To the inventors knowledge, in MBR systems, the anoxic zone was to date always implemented *in pre-denitrification* configurations (anoxic zone ahead of the aerobic zone), with a mixed liquor recirculation loop from the aerobic zone to the anoxic zone. This configuration originated from conventional activated sludge systems, that are traditionally designed with pre-denitrification process. This is expected to offer the following advantages :
(i) use of biodegradable organic matter available in the anoxic zone to improve denitrification rate, hence reduce the required volume of biological reactor, and
(ii) use of oxidation capacity of nitrate to degrade part of the organic matter, hence to reduce oxygen demand and to achieve saving in aeration requirement.

The inventors identify these advantages as non-substantial with MBR systems for the following reasons:
(i) due to the low mass organic load of MBR processes, the amount of biodegradable organic matter available for denitrification in the anoxic zone is very low, hence the denitrification rate is close to the *endogeneous denitrification rate* (minimum denitrification rate observed when no organic matter is available), and
(ii) the aeration requirement of MBR systems are mainly related to the aeration of the membrane filter in order to limit the fouling of the membrane, and not to the oxygen requirement of the mixed liquor, therefore the reduction in oxygen demand due to the pre-denitrification mode is not expected to reduce much the aeration requirement of the whole systems.

The pre-denitrification configuration appears to be not well-adapted to MBR technology. In contrast, post-denitrification process configurations can be in some cases favourable to MBR systems, and improve their performances.

It is to be noted that post-denitrification is reported in the literature for conventional activated sludge systems, but always while resorting to the addition of carbon sources (Wilson T.E. and Newton D., "Brewery Wastes as a Carbon Source for Denitrification at Tampa, Florida, May 1973", presented at the 28th Annual-Purdue Industrial Waste Conference ; Mitsdörfer R. and Gerhart U., "Nachgeschaltete Methanol-Denitrifikation im Sandfilter", gwf 133, 1992, Heft 9). The inventors claim that unlike conventional sludge systems, the addition of carbon sources is not required to achieve efficient post-denitrification with membrane bioreactor.

### Description of the invention

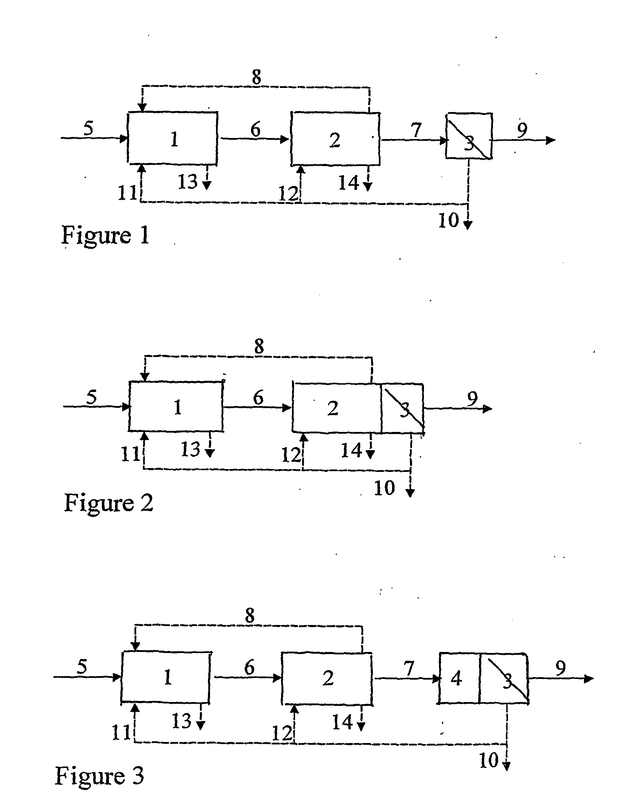

This description is made in reference to figures 1 to 5.

The following definitions will be used.

*Type of membrane filter:* The expression "membrane filter" refers to any type of membrane microfiltration or ultrafiltration device, with pore size ranging from 10nm to 10 µm.

*Source of water:* The expression "water to be treated" refers to any type of waste water source subject to any pretreatment (municipal or industrial wastewater, screened or presettled, etc).

*Design of biological zones:* The expressions "anaerobic zone", "anoxic zone" and "aerobic zone" refers to any type of biological reactor (plug-flow, well-mixed, or non-defined), maintained respectively under anaerobic, anoxic and aerobic conditions. The term "zone" refers to one or a succession of several biological reactors containing a biological mixed liquor. The invention is also valid for alternative reactor geometries, such as carrousel or meander reactors, which ensure successive aerobic and anoxic conditions of the mixed liquor.

*Aerobic .conditions:* The term "aerobic mixed liquor" refers to any mixed liquor in which the level of dissolved oxygen would be maintained over 0,1 mg/L.

*Anoxic conditions:* The term "anoxic mixed liquor" refers to any mixed liquor in which the level of dissolved oxygen would be maintained below 0,1 mg/L, and with a presence of nitrate.

*Anaerobic conditions:* The term "anaerobic mixed liquor" refers to any mixed liquor in which the level of dissolved oxygen would be maintained below 0,1 mg/L, and the level of nitrate would be maintained below 0.1 mg/L.

*Source of carbon:* The expression "source of carbon" refers to any material containing a carbon substrate which is made available for organisms. This includes, but is not limited to, raw water and derivatives, chemicals such as methanol, acetate, glucose, etc, or any industrial solid or liquid product (molasses, etc).

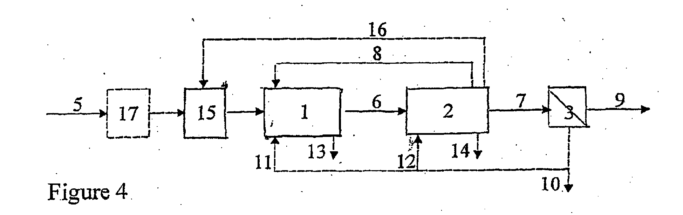

The invention relates to a process configuration for biologically treating waste water. It involves a biological reactor set-up with a post-denitrification zone and a membrane filter. The process includes a minimum of two distinct zones, an aerobic zone (1), and an anoxic zone (2), containing an aerobic and an anoxic mixed liquid liquor, and a membrane filter (3). The membrane filter can be set up in an external zone (Figure 1), immersed in the anoxic zone (Figure 2), or immersed in an additional aerobic zone (4), (Figure 3). Water to be treated (5) flows first into the aerobic zone (1). Aerobic mixed liquor (6) flows to the anoxic zone (2). Post-denitrification of nitrate NO3 occurs in this anoxic zone. Anoxic mixed liquor flows (2) to the feed side of the membrane filter (3), and optionally back (8) to the aerobic zone (1). The membrane filter treats the mixed liquor to traduce a treated effluent (9) lean in nitrogen, BOD, COD and organisms at a permeate side of the membrane filter and a liquid rich in rejected solids and organisms. Some or all of the material rejected by the membrane filter is removed from the process either directly (10) or by returning the material rejected by the membrane filter to one of the zones (11, 12) and wasting the mixed liquor from the aerobic or the anoxic zone (13, 14). In a first variation (Figure 4), an anaerobic zone (15), containing an anaerobic mixed liquor, is added in front of the aerobic zone (1), in order to achieve enhance biological phosphorous removal. In this variation, mixed liquor flows from the anoxic zone to the anaerobic zone (16). A pre-fermenter zone, containing the water to be treated, can be also optionally added (17), in order to improve the characteristics of the water to be treated and to foster enhanced biological phosphorous removal.

Other chemicals or products can be also added at specific places of the process according to needs (such as addition of coagulant to precipitate phosphorous, addition of acid or base to adjust pH, or addition of polymer to enhance performances of membrane filter).

The process according to the invention shows the following advantages.

Compared to traditional configurations of MBR systems, operating in pre-denitrification mode, the post-denitrification configuration is expected to achieve better effluent quality for nitrate (typically less than 5 mg N/L) and total nitrogen (typically less than 10 mg N/L). When an anaerobic zone is added (first variation), low total phosphorous content is also expected in the effluent (typically less than 1 mg N/L). The process will be also more compact, and will require lower mixed liquor flow rates, therefore lower power requirement. In addition, a simpler control strategy to optimise nitrogen removal is expected.

This system can be operated under the following ranges of operation conditions:

| | |
|---|---|
| Solid retention time (sludge age) | 10 - 50 days |
| Hydraulic retention time | 10 - 70h |
| Mixed liquor suspended solid (sludge concentration) | 5 - 20 g/L |
| Mass organic load | 0.05 - 0.25 kgCOD / kgMV S.d |
| Mixed liquor flow rate from membrane filter to aerobic zone (11) | 50 - 500% (re. unit throughflow) |
| Mixed liquor flow rate from anoxic to anaerobic zone (16) | 25 - 200% (re. unit throughflow) |

### Examples

A continuous process pilot plant was set up to confirm the advantages of this invention on pre-denitrification processes traditionally used with membrane bio-reactors. The post-denitrification reactor was set up according to Figure 4 with a separated aerated membrane filter system, whereas the pre-denitrification reactor consisted in the succession of anaerobic zone, anoxic zone and aerobic zone, with the same membrane system. Sludge retention time (SRT) was kept constant at 15 days and 25 days during further trials. The reactors were continuously fed with a constant flowrate of degritted municipal wastewater.
The hydraulic retention times (HRTs) of each zone are given in Table 1 below.

**Table 1**

| Post-denitrification reactor | Anaerobic zone | Aerobic zone | Anoxic zone | Aerated filter chamber | Overall bioreactor |
|---|---|---|---|---|---|
| Operating HRTs | 3.7h | 4.3h | 9.7h | 3.3h | 21h |

| Pre-denitrification reactor | Anaerobic zone | Anoxic zone | Aerobic zone | Aerated filter chamber | Overall bioreactor |
|---|---|---|---|---|---|
| Operating HRTs | 3.7h | 8.5h | 5.5h | 3.3h | 21h |

After 2-3 sludge ages of continuous operation, an extensive analysis campaign was carried out over 2 weeks. 24h average sample were taken everyday from each reactor effluent and analysed. Table 2 presents the average results of these analyses for the trials undertaken with 15 day sludge age.

**Table 2**

| | COD (mg O₂/L) | NH₄-N (mg N/L) | NO₃-N (mg N/L) | NT (mg N/L) | PT (mg P/L) |
|---|---|---|---|---|---|
| Post-denitrification reactor | | | | | |
| Influent | 653 | 39.0 | 0.33 | 60.0 | 8.4 |
| Effluent | 31.4 | 0.05 | 4.2 | 5.9 | 0.07 |
| Removal | 95.2% | 99.9% | - | 90,2.0% | 99.1% |
| Pre-denitrification reactor | | | | | |
| Influent | 1088 | 41.3 | 0.42 | 69.7 | 10.5 |
| Effluent | 35.7 | 0.49 | 6.0 | 9.2 | 0.10 |
| Removal | 96.7% | 98.8% | - | 86.8% | 99.0%. |

Both experiments were undertaken under the same operation conditions and for a similar quality of raw water. Table 2 shows that for COD and PT parameters the purification performances of the post-denitrification system are comparable to the pre-denitrification configuration, or slightly better. The difference between both system is greater for nitrogen parameters. The post-denitrification reactor achieved greater degree of ammonia and nitrogen removal, and lower nitrate values in the effluent. In particular, the post-denitrification reactor achieved 90,2% nitrogen removal, producing a 5.9 mg N/L effluent, whereas the pre-denitrification reactor achieved only around 87% with 9.2 mg N/L.

## Claims

1. A method for treating water to remove nitrogen to required low treatment level, using post-denitrification mechanisms without addition of carbon sources, and **characterized in that** it comprises the steps of
(a) providing an aerobic zone (1) having an aerobic mixed liquor having organisms which degrade the carbonaceous matter and nitrify the aerobic mixed liquor ;
(b) providing an anoxic zone (2) having an anoxic mixed liquor having organisms which denitrify the anoxic mixed liquor without any need of additional carbon sources;
(c) flowing water to be treated into said aerobic zone (1);
(d) flowing aerobic mixed liquor into said anoxic zone (2);
(e) contacting anoxic mixed liquor against the feed side of a membrane filter (3);
(f) producing a treated effluent lean in nitrogen, BOD, COD suspended solids and organisms from a permeate side of the membrane filter (3); and
(g) removing some or all of the material rejected by the membrane filter (3) from the process, said steps being performed substantially continuously and simultaneously.

2. A method for treating water to remove nitrogen to required low treatment level, using post-denitrification mechanisms without addition of carbon sources and comprising the steps of
(a) providing an aerobic zone (1) having an aerobic mixed liquor having organisms which degrade the carbonaceous matter and nitrify the aerobic mixed liquor;
(b) providing an anoxic zone (2) having an anoxic mixed liquor having organisms which denitrify the anoxic mixed liquor without any need of additional carbon sources;
(c) flowing water to be treated into said aerobic zone (1) ;
(d) flowing aerobic mixed liquor into said anoxic zone (2);
(e) flowing the anoxic mixed liquor into an aerated zone (4) containing a membrane filter;
(f) producing a treated effluent lean in nitrogen, BOD, COD suspended solids and organisms from a permeate side of the membrane filter (3); and
(g) removing some or all of the material rejected by the membrane filter (3) from the process, wherein the steps above are performed substantially continuously and substantially simultaneously.

3. The method of anyone of claims 1 or 2 wherein said anoxic mixed liquor flows to the aerobic zone.

4. The method of anyone of claims I to 3 wherein material rejected by the membrane filter (3) is also mixed with said aerobic mixed liquor.

5. The method of anyone of claims 1 to 3 wherein material rejected by the membrane filter (3) is also mixed with said anoxic mixed liquor.

6. The method of anyone of claims 4 or 5 wherein the step of removing material rejected by the membrane filter (3) from the process is accomplished by removing said aerobic mixed liquor containing material rejected by the membrane filter (3).

7. The method of anyone of claims 4 or 5 wherein the step of removing material rejected by the membrane filter (3) from the process is accomplished by removing said anoxic mixed liquor containing material rejected by the membrane filter (3).

8. The method of anyone of claims 1 to 7 inclusive further comprising the steps of
- providing an anaerobic (15) zone having an anaerobic mixed liquor;
- flowing water to be treated into said anaerobic zone (15);
- flowing anaerobic mixed liquor into said aerobic zone (1); and
- flowing derobic mixed liquor into said anoxic zone (2).

9. The method of claim 8 further comprising the steps of
- providing a pre-fermenter zone (17) containing fermented water;
- flowing water to be treated into the pre-fermenter (17) zone; and
- flowing the fermented water into the anaerobic zone (15).

10. The method of anyone of claims 1 to 9, further comprising the step of adding other chemicals or products other than a carbon source to specific places of the process.

11. The method of claim 10, wherein said chemicals or products are selected from coagulants, acids, bases or polymers.

## Patentansprüche

1. Verfahren zum Behandeln von Wasser, um Stickstoff zu einem erforderlichen niedrigen Behandlungsniveau zu entfernen, unter Nutzung von Post-Denitrifikationsmechanismen ohne Zusatz von Kohlenstoffquellen, **gekennzeichnet durch** die Schritte:
(a) Bereitstellen einer aeroben Zone (1), welche einen aeroben Belebtschlamm mit Organismen hat, welche die kohlenstoffhaltige Substanz abbauen und den aeroben Belebtschlamm nitrieren;
(b) Bereitstellen einer anoxischen Zone (2), welche einen anoxischen Belebtschlamm mit Organismen hat, welche den anoxischen Belebtschlamm denitrieren, ohne eine Hilfe von zusätzlichen Kohlenstoffquellen;
(c) Strömen von zu behandelndem Wasser in die aerobische Zone (1);
(d) Strömen von aerobem Belebtschlamm in die anoxische Zone (2);
(e) Kontaktieren von anoxischem Belebtschlamm gegen die Zuführseite eines Membranfilter (3);
(f) Produzieren eines behandelten Abflusses, welcher schlank an Stickstoff, biochemischem Sauerstoffbedarf (BOD), chemischem Sauerstoffbedarf (COD) unterstützten Feststoffen und Organismen ist, von einer durchdringbaren Seite des Membranfilters (3); und
(g) Entfernen von etwas oder dem gesamten Material, welches von dem Membranfilter (3) abgeschieden wurde, aus den Prozess,
wobei die Schritte im Wesentlichen kontinuierlich und simultan ausgeführt werden.

2. Verfahren zum Behandeln von Wasser, um Stickstoff zu einem erforderlichen niedrigen Behandlungsniveau zu entfernen, unter Nutzung von Post-Denitrifikationsmechanismen, ohne Zusatz von Kohlenstoffquellen, mit den Schritten:
(a) Bereitstellen einer aeroben Zone (1), welche einen aeroben Belebtschlamm mit Organismen hat, welche die kohlenstoffhaltige Substanz abbauen und den aeroben Belebtschlamm nitrieren;
(b) Bereitstellen einer anoxischen Zone (2), welche einen anoxischen Belebtschlamm mit Organismen hat, welche den anoxischen Belebtschlamm denitrieren, ohne eine Hilfe von zusätzlichen Kohlenstoffquellen;
(c) Strömen von zu behandelndem Wasser in die aerobische Zone (1);
(d) Strömen von aerobem Belebtschlamm in die anoxische Zone (2);
(e) Strömen des anoxischen Belebtschlamms in eine belüftete Zone (4), welche einen Membranfilter beinhaltet;
(f) Produzieren eines behandelten Abflusses, welcher schlank an Stickstoff, biochemischem Sauerstoffbedarf (BOD), chemischem Sauerstoffbedarf (COD) unterstützten Feststoffen und Organismen ist, von einer durchdringbaren Seite des Membranfilters (3); und
(g) Entfernen von etwas oder dem gesamten Material, welches von dem Membranfilter (3) abgeschieden wurde, aus den Prozess,
wobei die oben beschriebenen Schritte im Wesentlichen kontinuierlich und im Wesentlichen simultan ausgeführt werden.

3. Verfahren nach einem der Ansprüche 1 oder 2, wobei der anoxische Belebtschlamm zu der aeroben Zone strömt.

4. Verfahren nach einem der Ansprüche 1 bis 3, wobei das Material, welches von dem Membranfilter (3) abgeschieden wird, auch mit dem aeroben Belebtschlamm gemischt wird.

5. Verfahren nach einem der Ansprüche 1 bis 3, wobei das Material, welches von dem Membranfilter (3) abgeschieden wird, auch mit dem anoxischen Belebtschlamm gemischt wird.

6. Verfahren nach einem der Ansprüche 4 oder 5, wobei der Schritt des Entfernens des Materials, welches von dem Membranfilter (3) abgeschieden wird, aus dem Prozess durch Entfernen des aeroben Belebtschlamms ausgeführt wird, welcher Material enthält, welches von dem Membranfilter (3) abgeschieden wurde.

7. Verfahren nach einem der Ansprüche 4 oder 5, wobei der Schritt des Entfernens des Materials, welches von dem Membranfilter (3) abgeschieden wird, aus dem Prozess durch Entfernen des anoxischen Belebtschlamms ausgeführt wird, welcher Material enthält, welches von dem Membranfilter (3) abgeschieden wurde.

8. Verfahren nach einem der Ansprüche 1 bis 7, ferner aufweisend die Schritte:
- Bereitstellen einer anaeroben (15) Zone, welche einen anaeroben Belebtschlamm hat;
- Strömen von zu behandelndem Wasser in die anaerobe Zone (15);
- Strömen von anaerobem Belebtschlamm in die aerobische Zone (1); und
- Strömen von aerobem Belebtschlamm in die anoxische Zone (2).

9. Verfahren nach Anspruch 8, ferner aufweisend die Schritte:
- Bereitstellen einer Vor-Fermenter Zone (17), welche fermentiertes Wasser enthält;
- Strömen des zu behandelnden Wassers in die Vor-Fermenter (17) Zone; und
- Strömen des fermentierten Wassers in die anaerobe Zone (15).

10. Verfahren nach einem der Ansprüche 1 bis 9, ferner aufweisend den Schritt des Zusetzens anderer Chemikalien oder Produkte, andere als eine Kohlenstoffquelle, zu bestimmten Stellen des Prozesses.

11. Verfahren nach Anspruch 10, wobei die Chemikalien oder Produkte ausgewählt sind von: Gerinnungsmitteln, Säuren, Basen oder Polymeren.

## Revendications

1. Procédé de traitement de l'eau pour éliminer l'azote à un faible niveau de traitement souhaité, au moyen de mécanismes de post-dénitrification sans ajout de sources de carbone, et **caractérisé en ce qu'**il comprend les étapes suivantes :
(a) fourniture d'une zone aérobie (1) ayant une liqueur mixte aérobie comprenant des organismes qui dégradent la matière carbonée et nitrifient la liqueur mixte aérobie ;
(b) fourniture d'une zone anoxique (2) ayant une liqueur mixte anoxique comprenant des organismes qui dénitrifient la liqueur mixte anoxique sans besoin de sources de carbone supplémentaires ;
(c) écoulement de l'eau à traiter dans ladite zone aérobie (1) ;
(d) écoulement de la liqueur mixte aérobie dans ladite zone anoxique (2) ;
(e) mise en contact de la liqueur mixte anoxique avec le côté d'alimentation d'un filtre à membrane (3) ;
(f) production d'un effluent traité pauvre en azote, DBO, DCO, solides en suspension et organismes à partir d'un côté de perméation du filtre à membrane (3) ; et
(g) élimination du procédé d'une partie ou de la totalité de la matière rejetée par le filtre à membrane (3),
lesdites étapes étant réalisées sensiblement en continu et en simultané.

2. Procédé de traitement de l'eau pour éliminer l'azote à un niveau de traitement faible souhaité, au moyen de mécanismes de post-dénitrification sans ajout de sources de carbone, et comprenant les étapes suivantes :
(a) fourniture d'une zone aérobie (1) ayant une liqueur mixte aérobie comprenant des organismes qui dégradent la matière carbonée et nitrifient la liqueur mixte aérobie ;
(b) fourniture d'une zone anoxique (2) ayant une liqueur mixte anoxique comprenant des organismes qui dénitrifient la liqueur mixte anoxique sans besoin de sources de carbone supplémentaires ;
(c) écoulement de l'eau à traiter dans ladite zone aérobie (1) ;
(d) écoulement de la liqueur mixte aérobie dans ladite zone anoxique (2) ;
(e) écoulement de la liqueur mixte anoxique dans une zone aérée (4) contenant un filtre à membrane ;
(f) production d'un effluent traité pauvre en azote, DBO, DCO, solides en suspension et organismes à partir d'un côté de perméation du filtre à membrane (3) ; et
(g) élimination du procédé d'une partie ou de la totalité de la matière rejetée par le filtre à membrane (3),
dans lequel les étapes ci-dessus sont réalisées sensiblement en continu et en simultané.

3. Procédé selon l'une quelconque des revendications 1 ou 2, dans lequel ladite liqueur mixte anoxique s'écoule vers la zone aérobie.

4. Procédé selon l'une quelconque des revendications 1 à 3, dans lequel la matière rejetée par le filtre à membrane (3) est également mélangée avec ladite liqueur mixte aérobie.

5. Procédé selon l'une quelconque des revendications 1 à 3, dans lequel la matière rejetée par le filtre à membrane (3) est également mélangée avec ladite liqueur mixte anoxique.

6. Procédé selon l'une quelconque des revendications 4 ou 5, dans lequel l'étape d'élimination du procédé de la matière rejetée par le filtre à membrane (3) est accomplie en éliminant ladite liqueur mixte aérobie contenant la matière rejetée par le filtre à membrane (3).

7. Procédé selon l'une quelconque des revendications 4 ou 5, dans lequel l'étape d'élimination du procédé de la matière rejetée par le filtre à membrane (3) est accomplie en éliminant ladite liqueur mixte anoxique contenant la matière rejetée par le filtre à membrane (3).

8. Procédé selon l'une quelconque des revendications 1 ou 7 incluses, comprenant en outre les étapes suivantes :
- fourniture d'une zone anaérobie (15) contenant une liqueur mixte anaérobie ;
- écoulement de l'eau à traiter dans ladite zone anaérobie (15) ;
- écoulement de la liqueur mixte anaérobie dans ladite zone aérobie (1) ; et
- écoulement de la liqueur mixte aérobie dans ladite zone anoxique (2).

9. Procédé selon la revendication 8, comprenant en outre les étapes suivantes :
- fourniture d'une zone de pré-fermenteur (17) contenant de l'eau fermentée ;
- écoulement de l'eau à traiter dans la zone de pré-fermenteur (17) ; et
- écoulement de l'eau fermentée dans la zone anaérobie (15).

10. Procédé selon l'une quelconque des revendications 1 à 9, comprenant en outre l'étape d'ajout d'autres produits chimiques ou produits autres qu'une source de carbone à des endroits spécifiques du procédé.

11. Procédé selon la revendication 10, dans lequel lesdits produits chimiques ou produits sont choisis parmi les coagulants, les acides, les bases ou les polymères.
